# EUROPÄISCHE PATENTSCHRIFT

(11) **EP 4 193 075 B1**
(45) Veröffentlichungstag und Bekanntmachung des Hinweises auf die Patenterteilung: **09.04.2025**
(21) Anmeldenummer: 21742706.1
(22) Anmeldetag: 07.07.2021
(51) Int. Cl.: F16D 25/0635, F16D 13/70, B60K 6/387

(54) **DRUCKMITTELBETÄTIGTE, NORMAL GESCHLOSSENE TRENNKUPPLUNG MIT EINER MITROTIERENDEN BETÄTIGUNGSEINRICHTUNG IN AXIALER ÜBERLAPPUNG MIT EINER DÄMPFERVORRICHTUNG**
FLUID ACTUATED NORMALLY CLOSED DISCONNECT CLUTCH WITH AN ACTUATOR ROTATING WITH THE CLUTCH AND AXIALLY OVERLAPPING A DAMPING UNIT
EMBRAYAGE DE COUPURE NORMALEMENT FERMÉ ET ACTIONNÉ PAR FLUIDE AVEC UN ACTIONNEUR TOURNANT ÉTANT EN CHEVAUCHEMENT AXIAL AVEC UN AMORTISSEUR

(30) Priorität: 04.08.2020 DE 102020120523
(43) Veröffentlichungstag der Anmeldung: 14.06.2023
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2021/100591
(87) Internationale Veröffentlichungsnummer: WO 2022/028642

(56) Entgegenhaltungen:
- WO-A1-2013/113527
- WO-A1-2018/078029
- WO-A1-2020/164650
- DE-A1- 102019 129 313
- FR-A1- 2 871 109
- FR-A1- 3 073 784
- JP-A- H03 219 121
- US-A1- 2004 154 893
- US-B1- 6 332 521

## Beschreibung

Die Erfindung betrifft eine Trennkupplung mit einer Rotationsachse für einen Antriebsstrang, einen Antriebsstrang mit einer solchen Trennkupplung, sowie ein Kraftfahrzeug mit einem solchen Antriebsstrang.

Trennkupplungen sind im Bereich von Kraftfahrzeugen, beispielsweise mit einem hybridisierten Antriebsstrang, bekannt und werden zum Trennen einer Drehmomentübertragung zwischen einer Antriebsmaschine, beispielsweise einer Verbrennungskraftmaschine, und einem Getriebe zum Vortrieb des Kraftfahrzeugs eingesetzt. Die nachfolgend beschriebene Trennkupplung ist beispielsweise in einem hybridisierten Antriebsstrang eines Kraftfahrzeugs mit einer als P3 bezeichneten Konfiguration einsetzbar. Bei einer P3-Konfiguration ist die elektrische Antriebsmaschine zwischen der Schaltkupplung und dem Abtrieb des Kraftfahrzeugs angeordnet, beispielsweise bei einer Ausführungsform mit einem Doppelschaltgetriebe einer der beiden drehmomentübertragenden Wellen eingebunden oder dem Schaltgetriebe nachgeschaltet, beispielsweise baueinheitlich mit einem Differential ausgeführt.

Um die immer strenger werdenden Emissionsnormen sowie den geforderten Flottenverbrauch erfüllen zu können, setzen fast alle Automobilhersteller auf die Hybridisierung des Antriebsstranges. Um Gewicht und Bauraum zu sparen, wird die elektrische Antriebsmaschine direkt hinter den Torsionsschwingungsdämpfer des Verbrenners oder in ein (hybridisiertes) Doppelkupplungsgetriebe gelegt. Die Trennung der beiden Antriebsquellen (Verbrennungskraftmaschine und elektrische Antriebsmaschine) erfolgt mittels der Trennkupplung. Die Trennkupplung soll möglichst bauraumneutral realisiert und bestmöglich mit einer gewünschten oder notwendigen Dämpfervorrichtung kombiniert werden. Um die hohen Anforderungen an die Isolation zu erreichen, ist es zudem häufig erwünscht, ein Fliehkraftpendel möglichst bauraumneutral zu integrieren.

Aus der WO 2013/113527 A1 ist eine Trennkupplung bekannt, die auf den Oberbegriff des Anspruchs 1 lesbar ist.

Der vorliegenden Erfindung liegt die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft eine Trennkupplung mit einer Rotationsachse für einen Antriebsstrang, aufweisend zumindest die folgenden Komponenten:
- ein normal-geschlossen ausgeführtes Reibpaket zum in einem angepressten Zustand Übertragen eines Drehmoments;
- eine mitrotierende hydrostatische Betätigungseinrichtung zum schaltbaren Lösen des angepressten Zustands des Reibpakets; und
- eine Dämpfervorrichtung, umfassend einen Torsionsschwingungsdämpfer und/oder ein Fliehkraftpendel.

Die Betätigungseinrichtung ist zumindest im ausgefahrenen Zustand in axialer Überlappung mit der Dämpfervorrichtung angeordnet.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Die hier vorgeschlagene Trennkupplung ist zum schaltbaren Lösen einer Übertragung eines Drehmoments um die zentrale Rotationsachse zwischen zumindest einer Antriebsmaschine und einem Verbraucher eingerichtet. Zum lösbaren Übertragen eines Drehmoments ist ein normal-geschlossen ausgeführtes Reibpaket vorgesehen. Das Reibpaket umfasst Reibelemente, welche im angepressten Zustand (also im Normal-Zustand) zum reibschlüssigen Übertragen eines (vorbestimmt maximalen) Drehmoments eingerichtet ist. Ein solches Reibpaket ist einer Ausführungsform als sogenannte Scheibenkupplung mit zumindest einer Kupplungsscheibe ausgeführt oder als Lamellenpaket mit einer Mehrzahl von Innenlamellen und Außenlamellen. Um die Drehmomentübertragung schaltbar lösen zu können, ist eine hydraulische beziehungsweise hydrostatische Betätigungseinrichtung vorgesehen, wobei ein hydrostatischer Druck erhöht werden muss, um den Normal-Zustand des Reibpakets, also die Drehmomentübertragung aufzuheben.

Die Antriebsseite, also die Seite hin zu einer Antriebsmaschine, beispielsweise einer Verbrennungskraftmaschine, ist oftmals auch als Eingangsseite bezeichnet, weil in der Betrachtung eines Drehmomentflusses ausgehend von der Antriebsmaschine (Drehmomentquelle) das Drehmoment von der Antriebsmaschine in die Trennkupplung eingeht. Entsprechend wird in einer solchen Anwendung die Abtriebsseite, also die Seite hin zu einem Getriebe, als Ausgangsseite bezeichnet, weil in der entsprechenden Betrachtung der Abtrieb beziehungsweise das Getriebe die Drehmomentsenke beziehungsweise die Verbindung zu einem Verbraucher bildet. Es sei darauf hingewiesen, dass die Ausgangsseite in dieser Betrachtung des Drehmomentflusses nicht unbedingt unmittelbar die Eingangsseite eines Schaltgetriebes ist, sondern bevorzugt eine weitere Schaltkupplung, besonders bevorzugt eine Doppelschaltkupplung, mittelbar oder unmittelbar nachgeschaltet ist.

Bei der hier vorgeschlagenen Trennkupplung ist diese hydrostatische Betätigungseinrichtung mitrotierend ausgeführt. Diese hydrostatische Betätigungseinrichtung ist also anders als beispielsweise ein hydraulischer Zentralausrücker [CSC, engl.: Central Slave Cylinder] ohne ein Betätigungslager ausführbar. Damit wird erheblicher Bauraum in axialer und in radialer Ausdehnung eingespart, vor allem im Bereich der drehmomentübertragenden Welle, wo ansonsten ein solcher Zentralausrücker angeordnet werden muss.

Weiterhin ist eine Dämpfervorrichtung in die Trennkupplung integriert, welche einen Torsionsschwingungsdämpfer (beispielsweise ein Zweimassenschwungrad, einen Mehrflanschdämpfer oder einen Pendelwippendämpfer) und/oder ein Fliehkraftpendel umfasst. Die Dämpfervorrichtung ist bevorzugt möglichst nah bei der Antriebsmaschine angeordnet, sodass diese (bei einer elektrischen Antriebsmaschine) von externen Drehungleichförmigkeiten freigestellt ist und (bei einer Verbrennungskraftmaschine) eine Drehungleichförmigkeit der Drehmomentquelle möglichst frühzeitig aus dem Antriebsstrang heraus isoliert ist. Es sei darauf hingewiesen, dass die hier vorgeschlagene Trennkupplung ebenfalls in einer Konfiguration eines Antriebsstrangs einsetzbar ist, welche abweicht von der eingangs genannten P3-Konfiguration, beispielsweise in einer Konfiguration gemäß den bekannten Bezeichnungen:
- P0 (fest mit der Verbrennerwelle der Verbrennungskraftmaschine verbundener Motor bezogen auf das Getriebe rückseitig der Verbrennungskraftmaschine),
- P1 (fest mit der Verbrennerwelle der Verbrennungskraftmaschine verbundener Motor zwischen Verbrennungskraftmaschine und Getriebe),
- P2 (per Kupplung trennbare drehmomentübertragende Verbindung mit der Verbrennerwelle) und P4 (separate elektrische Achse),
sowie einer Kombination davon, von welchen hier besonders genannt seien P0+P2, P1+P2 und P2+P4, wobei eine Kombination eine entsprechende Mehrzahl von elektrischen Antriebsmaschinen umfasst.

Hier ist nun vorgeschlagen, dass die Betätigungseinrichtung und die Dämpfervorrichtung axial sehr kompakt ausgeführt sind, indem die Betätigungseinrichtung zumindest im ausgefahrenen Zustand, also der beim Aufheben des Normal-Zustands vorliegenden maximalen axialen Ausdehnung, zumindest teilweise in axialer Überlappung mit der Dämpfervorrichtung angeordnet ist. Somit sind die sonst einander widersprechenden Anforderungen an eine Betätigungseinrichtung gelöst; nämlich ist eine der Anforderungen das Zulassen eines hohen übertragbaren Drehmoments über die ausgangsseitige Welle (beispielsweise die Getriebeeingangswelle) und eine andere Anforderung die Nutzung eines möglichst geringen axialen Bauraums.

In einer mitrotierenden hydrostatischen Betätigungseinrichtung wird bei hohen Drehzahlen infolge der Fliehkraft ein axialer Druck in Betätigungsrichtung erzeugt, sodass also das Reibpaket aus seinem Normal-Zustand herausgezwungen wird. Indem das Reibpaket hier normal-geschlossen ausgeführt ist, ist dieser Nachteil eines mitrotierenden hydrostatischen Betätigungseinrichtung kompensiert, weil dieser betätigende Effekt sich nur bei hohen Drehzahlen auswirkt, wenn keine hohen Drehmomente übertragen werden müssen. In einer Konfiguration der Trennkupplung kann es nämlich dazu kommen, dass die Betätigungseinrichtung infolge des Fliehkrafteinflusses bei hohen Drehzahlen das Reibpaket in Richtung geöffnet gezwungen wird und also das maximal übertragbare Drehmoment reduziert wird. Die Funktion der Trennkupplung ist also hiervon nicht beeinträchtigt.

Im Gegenteil ist bei einer normal-offen ausgeführten Trennkupplung das Reibpaket von der Betätigungseinrichtung bei hohen Drehzahlen stärker geschlossen (Betätigungsrichtung) und damit sind die (zudem passiven) Betätigungskräfte zum Öffnen des Reibpakets erhöht. Es muss dann also eine zusätzlich kompensierende Gegenkraft vorgesehen werden. Bei der hier vorgeschlagenen normal-geschlossenen Trennkupplung wirken die Kräfte anwendungsspezifisch richtungsrichtig zusammen.

Das Reibpaket umfasst eine Reibscheibe, eine Anpressplatte, eine Gegenplatte, einen Drucktopf und eine Tellerfeder,
wobei bevorzugt die Tellerfeder zwischen der Gegenplatte und dem Drucktopf abgestützt ist.

Hier ist vorgeschlagen, dass das Reibpaket der Trennkupplung als Scheibenkupplung ausgeführt ist, wobei eine (bevorzugt einzige) Reibscheibe, eine (bevorzugt einzige) Anpressplatte, eine (bevorzugt einzige) Gegenplatte, ein Drucktopf und eine Tellerfeder, welche beispielsweise als Tellerfederpaket ausgeführt ist, umfasst sind. Die Reibscheibe ist zwischen der Anpressplatte und der Gegenplatte axial verpressbar, wobei von der Tellerfeder im Normal-Zustand, bei welchem also keine Betätigungskraft von der Betätigungseinrichtung auf das Reibpaket aufgegeben wird, die Anpressplatte hin zu der Gegenplatte gedrückt beziehungsweise gezogen ist. Somit ist von der Reibscheibe axial beidseitig ein Reibschluss gebildet, und zwar mit der Anpressplatte und mit der Gegenplatte. In diesem Normal-Zustand ist eine vorbestimmte Drehmomentspanne übertragbar. Die Vorspannung der Tellerfeder bestimmt somit das maximal übertragbare Drehmoment. Es sei darauf hingewiesen, dass die Tellerfeder bevorzugt als Membranfeder ausgeführt ist, von welcher in einem Normal-Zustand eine höhere oder gleich große Axialkraft als in einem ausgefahrenen Zustand ausgeübt ist, wobei bevorzugt das (besonders bevorzugt einzige) Betriebsmaximum der Axialkraft der Membranfeder zwischen dem Normal-Zustand und dem ausgefahrenen Zustand liegt.

In einer vorteilhaften Ausführungsform ist die Tellerfeder zwischen der Gegenplatte und dem Drucktopf abgestützt, sodass die Anpressplatte von dem Drucktopf im Normal-Zustand gegen die Reibscheibe und die Reibscheibe gegen die Gegenplatte gezogen ist. Eine solche Ausführungsform mit einem kleinen Drucktopf beziehungsweise einem kleinen Anteil des Drucktopfs aus Sicht der Anpressplatte jenseits der Gegenplatte ist für viele Anwendungsbereiche vorteilhaft, um vorhandenen Bauraum auszunutzen. Damit ist also eine bauraumneutrale Ausführungsform begünstigt.

In einer Ausführungsform ist die Tellerfeder über einen Drahtring an der Gegenplatte und/oder an dem Drucktopf abgestützt, sodass eine definierte Auflage und/oder ein Materialeinsatz für die Gegenplatte beziehungsweise den Drucktopf hinsichtlich einer Oberflächenhärte optimierbar ist, um Eingrabungen (bei weicher Oberfläche) oder Druckbruchverhalten (bei spröder Oberfläche) zu vermeiden.

In einer bevorzugten Ausführungsform sind zwischen der Gegenplatte und dem Drucktopf beziehungsweise der Anpressplatte über den Umfang (bevorzugt ausgewuchtet und/oder gleichmäßig) verteilt eine Mehrzahl von Blattfedern vorgesehen, welche bevorzugt der Tellerfeder antagonistisch entgegenwirkend ausgeführt sind, sodass eine Grundspannung und/oder ein Abheben der Anpressplatte im ausgefahrenen Zustand sichergestellt ist. In einer bevorzugten Ausführungsform ist jede der Blattfedern als Blattfederpaket ausgeführt. In einer bevorzugten Ausführungsform ist jede der Blattfedern jeweils plattenseitig vernietet, also mit der Anpressplatte und der Gegenplatte.

Erfindungsgemäß wird vorgeschlagen, dass der Drucktopf zum kraftübertragenden Kontakt mit:
- der Anpressplatte radial-außerhalb der Reibfläche der Reibscheibe, und
- der Betätigungseinrichtung radial-innerhalb der Reibfläche der Reibscheibe durch die Gegenplatte hindurchgreifend angeordnet ist.

Hier ist ein besonders vorteilhafter Drucktopf vorgeschlagen, welcher besonders gut in einem vorhandenen Bauraum einsetzbar ist, wobei dieser Drucktopf zweifach durch die Gegenplatte hindurchgreifend angeordnet ist, und zwar einmal zum Anbinden an die Anpressplatte und einmal zum Anbinden an die Betätigungseinrichtung. Von dem Drucktopf ist mit seinen hindurchgreifenden Fingern radial eine Klammer um die Reibfläche der Reibscheibe gebildet. Damit ist also eine bauraumneutrale Ausführungsform begünstigt.

Ein solcher Drucktopf ist zudem einfach montierbar und die Vorspannung der Tellerfeder in einem sehr späten Schritt justierbar. In einer bevorzugten Ausführungsform erstreckt sich der Drucktopf in vollständiger radialer Überlappung mit der Dämpfervorrichtung und die Betätigungseinrichtung ragt (zum Kontakt mit dem Drucktopf) radial in den Bereich der Dämpfervorrichtung hinein.

Es wird weiterhin in einer vorteilhaften Ausführungsform der Trennkupplung vorgeschlagen, dass die Betätigungseinrichtung einen Druckraum mit einem axial bewegbaren Druckkolben umfasst, welcher radial-innerhalb des Reibpakets angeordnet ist, bevorzugt radial-innerhalb einer Drehmomentanbindung der Reibscheibe nach einer Ausführungsform gemäß der obigen Beschreibung.

Bei dieser Ausführungsform ist vorgeschlagen, dass die mitrotierende hydrostatische Betätigungseinrichtung einen Druckraum umfasst, in welchem mit entsprechender Dichtung ein axial bewegbarer Druckkolben angeordnet ist. Somit ist mittels einer Volumenerhöhung beziehungsweise Druckerhöhung der Druckkolben axial bewegbar. Bei einem kleinen (beispielsweise minimalen) Volumen ist keine Betätigungskraft auf das Reibpaket ausgeübt, sodass das Reibpaket dann den Normal-Zustand einnimmt beziehungsweise darin verbleibt. Bei einem großen (beispielsweise maximalen) Volumen ist der Druckkolben ausgefahren und von dem Druckkolben ist eine (große beziehungsweise maximale) Betätigungskraft auf das Reibpaket ausgeübt, sodass das Reibpaket dann den ausgefahrenen Zustand einnimmt beziehungsweise darin (aktiv) gehalten ist. Beispielsweise ist die Betätigungskraft von dem Druckkolben mittels einer Anbindung an den Drucktopf gemäß einer Ausführungsform der obigen Beschreibung übertragen.

Der Druckraum und der axial bewegbare Druckkolben sind radial-innerhalb des Reibpakets angeordnet und befinden sich in axialer Überlappung mit dem Reibpaket oder teilweise (hin zu der Dämpfervorrichtung) axial versetzt dazu, oder bevorzugt vollständig außerhalb einer axialen Überlappung mit dem Reibpaket. Damit ist ein enormer axialer Bauraumgewinn im Bereich zentral der Trennkupplung, also bei der drehmomentübertragenden Welle, beispielsweise einer Getriebeeingangswelle, geschaffen.

In einer vorteilhaften Ausführungsform ist die Betätigungseinrichtung vollständig radial-innerhalb einer Drehmomentanbindung der Reibscheibe nach einer Ausführungsform gemäß der obigen Beschreibung angeordnet und bevorzugt in axialer Überlappung mit dieser Drehmomentanbindung angeordnet. Eine solche Drehmomentanbindung ist beispielsweise eine Schnittstelle des Reibpakets mit der Dämpfervorrichtung, beispielsweise ausgeführt als Steckverzahnung, wobei Reibscheiben-seitig die Drehmomentanbindung bevorzugt ein axial relativ steifes scheibenartiges Element umfasst, an welchem eine lamellenartige Aufnahme für Reibbeläge (beispielsweise umfassend eine Belagfederung) mit einer relativ geringen axialen Steifigkeit angeordnet ist.

Es wird weiterhin in einer vorteilhaften Ausführungsform der Trennkupplung vorgeschlagen, dass der Druckkolben einen radial-äußeren Abschnitt und einen radial-inneren Abschnitt aufweist,
wobei zwischen den genannten Abschnitten eine Stufe mit einem Wandabschnitt mit axialer Erstreckung gebildet ist, wobei zwischen dem genannten Wandabschnitt und einer korrespondierenden seitlichen Rückwand des Druckraums radial-innen ein Spaltraum mit axialer Erstreckung gebildet ist.

Bei dieser Ausführungsform ist vorgeschlagen, dass der Druckraum und der korrespondierende Druckkolben in zumindest zwei radiale Abschnitte unterteilt ist, wobei zwischen den beiden Abschnitten eine Stufe gebildet ist mit einem Wandabschnitt mit axialer Erstreckung bevorzugt mit rein paralleler Erstreckung zu der Rotationsachse der Trennkupplung. Der Druckraum weist eine korrespondierende seitliche Rückwand auf, wobei zwischen dem axialen Wandabschnitt des Druckkolbens und der seitlichen Rückwand radial-innen (in einem dem Normal-Zustand entsprechenden eingefahrenen Zustand) ein Spaltraum gebildet ist. Das Volumen des Druckraums ist dadurch sehr gering und der Druckkolben infolge der Stufe im Vergleich zu einer in radialer Ausdehnung ebenen Ausführungsform des Druckkolbens versteift.

In einer vorteilhaften Ausführungsform ist rückseitig des Spaltraums, also radial-außen der seitlichen Rückwand des Druckraums, eine Dichtung zu dem Druckkolben gebildet, wobei also von dem Druckkolben um diese seitliche Rückwand im Querschnitt eine C-Form gebildet ist.

In einer bevorzugten Ausführungsform ist die Trennkupplung (zumindest das Reibpaket und/oder die Dämpfervorrichtung) trocken ausgeführt. **In** einer Ausführungsform ist ein geringer Zustrom der hydraulischen Flüssigkeit aus dem Druckraum der Betätigungseinrichtung in den Bereich der Reibbeläge und/oder der Dämpfervorrichtung nicht vollständig unterbunden. Bevorzugt ist auch bei einem möglichen Eintreten von der hydraulischen Flüssigkeit in den trockenen Bereich der Trennkupplung für die vor allem bei einem Kupplungsvorgang auftretende Wärme eine Luftkühlung maßgeblich.

Es wird weiterhin in einer vorteilhaften Ausführungsform der Trennkupplung vorgeschlagen, dass der Druckkolben radial-außen eine Dichtungswandung aufweist, und der Druckraum eine zu der Dichtungswandung parallele seitliche Rückwand, bevorzugt nach einer Ausführungsform gemäß der obigen Beschreibung, mit einer radial-außen liegenden Dichtung zu der Dichtungswandung des Druckkolbens aufweist,
wobei bevorzugt der Druckkolben mittels der Dichtung zentriert ist.

Der Druckraum weist eine an der axialen Rückwand des Druckraums, welche beispielsweise wie zuvor beschrieben ausgeführt ist, radial-außen liegende Dichtung auf. Der Druckkolben umfasst eine dazu parallel verlaufende Dichtungswandung, welche entsprechend der axialen Hubbewegung des Druckkolbens über die Dichtung gleitet. Beispielsweise bildet der Druckkolben um die axiale Rückwand des Druckraums im Querschnitt eine C-Form.

Weil in dem Zusammenspiel von der axialen Hubbewegung der Dichtungswandung und der axial-fixierten Rückwand, bevorzugt umfassend die dann axial-fixierte Dichtung, eine große axiale Länge notwendig ist und radial-innen der axialen Rückwand des Druckraums auf den Hub axial aufaddierend angeordnet werden müsste, ist es für einen geringen axialen Bauraum vorteilhaft, die Dichtung radial-außen, also abgewandt von dem Druckraum, anzuordnen. So ist nämlich der Längenabschnitt des Hubs des Druckkolbens mit der Dichtung beziehungsweise mit dem dichtungswirksamen Längenabschnitt der Dichtungswandung und der axialen Rückwand miteinander axial überlappend angeordnet. Dabei ist zudem für eine kraftübertragende Verbindung des Druckkolbens mit dem Drucktopf vorhandener Bauraum effizient nutzbar.

Unabhängig davon ist bevorzugt der Druckkolben mittels der axialen Rückwand, und zwar bevorzugt radial-außen, zentriert. Besonders bevorzugt ist von der Dichtung ein Gleitring umfasst, mittels welchem der Druckkolben radial beabstandet von der axialen Rückwand und reibungsarm zentriert ist. Zudem ist mittels des Gleitrings eine erste Schmutzabweisung, besonders bei einer trockenen Ausführungsform der Trennkupplung, zum Schonen der Dichtungsfläche eines druckraumseitig des Gleitrings angeordneten Dichtungsrings der Dichtung geschaffen. In einer bevorzugten Ausführungsform sind die Komponenten der Dichtung (beispielsweise ein Dichtungsring und/oder ein Gleitring) ringförmig in der axialen Rückwand des Druckraums, bevorzugt radial-außen, in einer entsprechenden Nut aufgenommen und damit axial fixiert.

Es wird weiterhin in einer vorteilhaften Ausführungsform der Trennkupplung vorgeschlagen, dass die Reibscheibe nach einer Ausführungsform gemäß der obigen Beschreibung mit der Dämpfervorrichtung dauerhaft drehmomentübertragend verbunden ist,
bevorzugt mittels einer Steckverzahnung.

Bei dieser Ausführungsform ist die Reibscheibe mit der Dämpfervorrichtung verbunden, wobei bevorzugt die Dämpfervorrichtung antriebsseitig (beispielsweise verbrennerseitig) und die Anpressplatte sowie die Gegenplatte abtriebsseitig (beispielsweise getriebeseitig) angeordnet sind.

Die hier vorgeschlagene Trennkupplung ist also maßgeblich dafür zuständig, die Antriebsmaschine vollständig aus dem Drehmomentfluss auszukoppeln, also zu trennen. In einer Ausführungsform ist die Trennkupplung beispielsweise beim Anlassen der Antriebsmaschine (ausgeführt als Verbrennungskraftmaschine) zum Beschleunigen auf zumindest eine Leerlaufdrehzahl und/oder zum Synchronisieren der Verbrennerwelle und der Getriebewelle unter Verschleifung einer Drehmomentdifferenz eingerichtet.

In einer vorteilhaften Ausführungsform ist die Reibscheibe mittels einer Steckverzahnung mit der Dämpfervorrichtung dauerhaft drehmomentübertragend verbunden, wobei die Reibscheibe axial relativ zu der Dämpfervorrichtung (möglichst leicht) verschiebbar ist. Somit liegt ein möglichst geringes Schleppmoment in dem Reibpaket vor, weil die Reibscheibe im offenen Zustand des Reibpakets widerstandsarm den axialen Abhebekräften folgen, also leicht von der Anpressplatte sowie von der Gegenplatte abheben kann. Wie oben bereits beschrieben, ist bevorzugt die Betätigungseinrichtung zumindest teilweise in axialer Überlappung mit dieser Steckverzahnung angeordnet.

Die Dämpfervorrichtung umfasst in einer vorteilhaften Ausführungsform zumindest einen Primärflansch und einen Sekundärflansch, wobei der Primärflansch motorseitig angeordnet ist und der Sekundärflansch Reibpaket-seitig. Der Primärflansch und der Sekundärflansch sind bevorzugt baueinheitlich vormontierbar und vor der Montage in der Trennkupplung zueinander vorzentriert. **In** einer bevorzugten Ausführungsform ist die Zentrierung des Primärflanschs zu dem Sekundärflansch in der Trennkupplung während der Montage des Reibpakets einstellbar beziehungsweise justierbar, wobei bevorzugt zugleich die Reibscheibe, beispielsweise mittels der Steckverzahnung, zu der Anpressplatte und der Gegenplatte zentriert wird.

In einer bevorzugten Ausführungsform ist ein Fliehkraftpendel an dem Sekundärflansch angeordnet, beispielsweise radial-innerhalb eines Federpakets zwischen dem Primärflansch und dem Sekundärflansch.

Gemäß einem weiteren Aspekt wird ein Antriebsstrang vorgeschlagen, aufweisend zumindest die folgenden Komponenten:
- zumindest eine Antriebsmaschine mit einer Maschinenwelle;
- ein Getriebe zum Übertragen eines Drehmoments der zumindest einen Maschinenwelle an einen Verbraucher; und
- eine Trennkupplung nach einer Ausführungsform gemäß der obigen Beschreibung,
wobei ein Drehmoment zwischen zumindest einer der Antriebsmaschinen und dem Verbraucher mittels der Trennkupplung lösbar übertragbar ist.

Der hier vorgeschlagene Antriebsstrang umfasst eine Trennkupplung in einer Ausführungsform gemäß der obigen Beschreibung, wobei die Trennkupplung eine Drehmomentübertragung von der Antriebsmaschine beziehungsweise deren Maschinenwelle auf zumindest einen Verbraucher, beispielsweise in einem Kraftfahrzeug die Vortriebsräder, mittels einer von der hydrostatischen Betätigungseinrichtung aufgegebenen Betätigungskraft beziehungsweise Anpresskraft auf das Reibpaket schaltbar, also lösbar, ist. Dies schließt mitnichten eine umgekehrte Drehmomentübertragung von dem Verbraucher auf die Maschinenwelle aus, in einem Kraftfahrzeug beispielsweise zum Einsatz der Motorbremse zum Entschleunigen des Kraftfahrzeugs und/oder zum Rekuperieren von Bremsenergie. Die Antriebsmaschine ist beispielsweise eine Verbrennungskraftmaschine und/oder eine elektrische Antriebsmaschine. In einer Ausführungsform ist die Eingangsseite der Trennkupplung mit der Maschinenwelle, bevorzugt einer Verbrennerwelle, drehmomentfest verbunden und die Ausgangsseite (zumindest mittelbar, beispielsweise über ein Getriebe) mit dem zumindest einen Verbraucher drehmomentfest verbunden. Das Getriebe umfasst bevorzugt eine Doppelkupplung und ein Doppelschaltgetriebe. Bevorzugt ist der Antriebsstrang hybridisiert, wobei besonders bevorzugt gemäß einer P3-Konfiguration einem Doppelschaltgetriebe nachgeschaltet oder in einem der beiden parallelen Stränge (beispielsweise umfassend die geradzahligen Schaltgänge) eine elektrische Antriebsmaschine zur Drehmomentabgabe eingebunden ist.

Mit der hier vorgeschlagenen Trennkupplung ist ohne Nachteile auf das dynamische Verhalten, beispielsweise das erforderliche übertragbare Drehmoment, ein sehr kompakter Aufbau erreicht, sodass diese Trennkupplung sich bei hoher Leistungsdichte bauraumneutral in einen Antriebsstrang, vor allem in einen hybridisierten Antriebsstrang, integrieren lässt.

Gemäß einem weiteren Aspekt wird ein Kraftfahrzeug vorgeschlagen, aufweisend zumindest ein Vortriebsrad, welches mittels eines Antriebsstrangs nach einer Ausführungsform gemäß der obigen Beschreibung zum Vortrieb des Kraftfahrzeugs antreibbar ist.

Der Bauraum ist gerade bei Kraftfahrzeugen aufgrund der zunehmenden Anzahl von Komponenten besonders gering und es ist daher besonders vorteilhaft, einen Antriebsstrang kleiner Baugröße zu verwenden. Mit dem gewünschten sogenannten Downsizing der Antriebsmaschine bei einer gleichzeitigen Verringerung der Betriebsdrehzahlen wird die Intensität der störenden Torsionsschwingungen und auch bei zunehmenden Drehmomenten oder einer Verkleinerung der Trennkupplung die Anforderung an die Betätigungskräfte erhöht. Eine ähnliche Problemstellung ergibt sich bei der sogenannten Hybridisierung, bei welcher eine elektrische Antriebsmaschine immer häufiger eingesetzt oder sogar die Hauptdrehmomentquelle bildet und eine möglichst kleine Verbrennungskraftmaschine einzusetzen ist, welche aber deutlicher häufiger dem Antriebsstrang zugeschaltet und wieder weggeschaltet werden muss. Es ist daher eine Herausforderung, eine ausreichende Betätigungskraft bei gleichzeitig geringen Teilekosten und geringem verfügbarem Bauraum bereitzustellen.

Verschärft wird diese Problematik bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Der hier vorgeschlagene Antriebsstrang weist trotz einer hohen Anzahl von Komponenten eine geringere Baugröße auf, wobei zugleich ein hoher Wirkungsgrad der Drehmomentübertragung sichergestellt ist.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo MiTo, Volkswagen Polo, Ford Ka+ oder Renault Clio. Bekannte Hybrid-Fahrzeuge sind BMW 330e oder der Toyota Yaris Hybrid. Als Mild-Hybride bekannt sind beispielsweise ein Audi A6 50 TFSI e oder ein BMW X2 xDrive25e.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Trennkupplung mit einer Rotationsachse in einer Schnittansicht; und
- Fig. 2:: schaltschematisch ein Antriebsstrang in einem Kraftfahrzeug mit einer Trennkupplung.

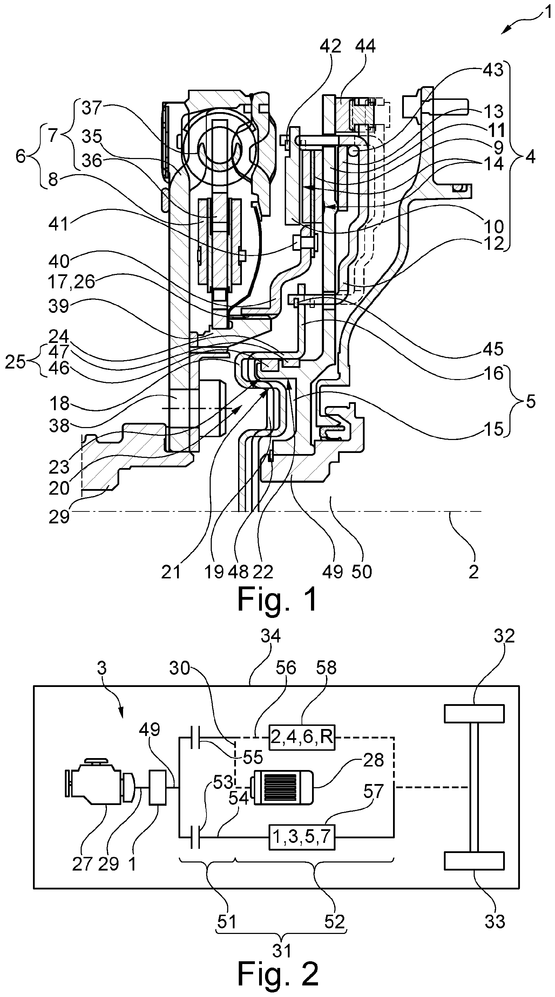

In Fig. 1 ist eine Trennkupplung **1** mit einer Rotationsachse **2** in einer Schnittansicht gezeigt. Die Trennkupplung **1** umfasst ein normal-geschlossen ausgeführtes Reibpaket **4,** eine mitrotierende hydrostatische Betätigungseinrichtung **5** sowie eine Dämpfervorrichtung **6**. Die Dämpfervorrichtung **6** ist hier als Torsionsschwingungsdämpfer **7** mit einem Primärflansch **35**, einem Sekundärflansch **36** sowie einem zwischen dem Primärflansch **35** und dem Sekundärflansch **36** zur Reduzierung von Drehungleichförmigkeiten ausgebildeten Federpaket **37** ausgeführt. Über den Primärflansch **35** ist die Dämpfervorrichtung **6** mittels eines als Verschraubung ausgeführten Motoranschlusses **38** mit einer Verbrennerwelle **29** einer Verbrennungskraftmaschine **27** (vergleiche Fig. 2) drehmomentübertragend verbunden. Von dem Sekundärflansch **36** ist mittels einer als Steckverzahnung **26** ausgeführten Drehmomentanbindung **17** die Schnittstelle mit dem Reibpaket **4** gebildet. Zusätzlich ist ein Fliehkraftpendel **8** vorgesehen, welches hier (optional) radial-innerhalb des Federpakets **37** und radial-außerhalb der Drehmomentanbindung **17** und (optional) an dem Sekundärflansch **36** angeordnet ist. Die Steckverzahnung **26** der Drehmomentanbindung **17** ist derart gebildet, dass der Sekundärflansch **36** eine Dämpfernabe **39** mit einer Außenverzahnung aufweist und die korrespondierende Reibscheibe **9** ein Verzahnungselement **40** mit einer Innenverzahnung aufweist, welche miteinander dauerhaft drehmomentübertragend verbunden sind. Die Verbindung mittels der Steckverzahnung **26** hat den Vorteil, dass die Reibscheibe **9** axial relativ zu der Dämpfervorrichtung **6** leicht verschiebbar ist. Dadurch ist ein Schleppmoment reduziert. Die Reibscheibe **9** ist in der gezeigten Ausführungsform mittels einer Mehrzahl von Nieten **41** mit dem Verzahnungselement **40** verbunden.

Die Reibscheibe **9** ist Teil des Reibpakets **4,** wobei das Reibpaket **4** weiterhin eine axial verschiebbar gelagerte Anpressplatte **10,** eine axial-fixierte Gegenplatte **11,** einen Drucktopf **12** und eine Tellerfeder **13** aufweist. Die reibschlüssig drehmomentübertragenden Reibflächen **14** des Reibpakets **4** sind in radialer Erstreckung etwa auf Höhe des Federpakets **37** der Dämpfervorrichtung **6** angeordnet.

In der Darstellung ist der Drucktopf **12** in seinen zwei maximalen Zuständen gezeigt. Zum einen ist der Drucktopf **12** mit einer Strichzweipunktlinie in jener dem normal-geschlossenen Zustand entsprechenden Lage und zum anderen mit einer Volllinie in jener bei den Reibpartnern dargestellten ausgefahrenen Zustand entsprechenden Lage dargestellt. Die Reibscheibe **9** ist mit ihren beidseitigen Reibflächen **14** axial zwischen der (darstellungsgemäß links angeordneten) Anpressplatte **10** und der (darstellungsgemäß rechts angeordneten) Gegenplatte **11** platziert.

Die Anpressplatte **10** ist formschlüssig mit dem Drucktopf **12** drehmomentübertragend sowie über einen radial-äußeren Sicherungsring **42** (die Demontage ermöglichend) zu dem Drucktopf **12** axial fixiert und damit Axialkraft-übertragend verbunden. Bei dieser Ausführungsform ist der Drucktopf **12** (optional) radial-außerhalb der Reibscheibe **9** die Verbindung mit der Anpressplatte **10** bildend durch die Gegenplatte **11** hindurchgreifend eingerichtet. In dem normal-geschlossenen Zustand ist die Reibscheibe **9** zwischen der Anpressplatte **10** und der Gegenplatte **11** axial verpresst, indem die zur Drehmomentübertragung erforderliche Anpresskraft (allein) über die Tellerfeder **13** erzeugt ist und so die Anpressplatte **10** hin zu der Gegenplatte **11** gezogen ist. Somit ist von der Reibscheibe **9** axial beidseitig ein Reibschluss mittels der Reibflächen **14** gebildet. Die Drehmomentübertragung von Anpressplatte **10** zur Gegenplatte **11** erfolgt über den Drucktopf **12**. Die Tellerfeder **13** ist (optional) über einen Drahtring **43** an der Gegenplatte **11** und an dem Drucktopf **12** abgestützt.

Weiterhin ist der Drucktopf **12** mittels eines über den Umfang verteilten Blattfederpakets **44** radial-außen an der Gegenplatte **11** axial beweglich angebunden, welches der Tellerfeder **13** antagonistisch entgegenwirkend ausgeführt ist, sodass eine Grundspannung und/oder ein Abheben der Anpressplatte **10** im ausgefahrenen Zustand sichergestellt ist.

Der Drucktopf **12** ist (optional) radial-innen ebenfalls durch die Gegenplatte **11** hindurchgreifend zum Anbinden an die Betätigungseinrichtung **5** angeordnet, sodass von dem Drucktopf **12** mit seinen beiden hindurchgreifenden Fingern radial eine Klammer um die Reibflächen **14** der Reibscheibe **9** gebildet ist.

Die Betätigungseinrichtung **5** zum (aktiven) Öffnen des Reibpakets **4** umfasst einen Druckraum **15** mit einem axial bewegbaren Druckkolben **16**, wobei der Druckraum **15** radial-innerhalb der Drehmomentanbindung **17** und in axialer Überlappung mit dem Reibpaket **4** angeordnet ist. Der Druckkolben **16** ist mittels eines radial-inneren Sicherungsrings **45** mit dem Drucktopf **12** verbunden. Der Druckraum **15** ist weiterhin von der Gegenplatte **11** gebildet und mit einer Dichtung **25** zu dem Druckkolben **16** versehen. In der gezeigten Ausführungsform ist der Druckraum **15** und der korrespondierende Druckkolben **16** in einen radial-äußeren Abschnitt **18** und in einen radial-inneren Abschnitt **19** unterteilt, wobei zwischen den beiden Abschnitten **18,19** eine Stufe **20** gebildet ist. Die Stufe **20** ist mit einem axialen Wandabschnitt **21** an dem Druckkolben **16** mit rein paralleler Erstreckung zu der Rotationsachse **2** der Trennkupplung **1** gebildet. An der Gegenplatte **11** ist die korrespondierende axiale Rückwand **22** gebildet, sodass zwischen dem axialen Wandabschnitt **21** und der axialen Rückwand **22** ein Spaltraum **23** in axial und radialer Erstreckung eingerichtet ist. Das Volumen des Druckraums **15** ist dadurch sehr gering und der Druckkolben **16** infolge der Stufe **20** im Vergleich zu einer in radialer Ausdehnung ebenen Ausführungsform des Druckkolbens **16** versteift.

Der Druckraum **15** weist eine an der axialen Rückwand **22** des Druckraums **15** radial-außen liegende Dichtung **25** auf, welche hier (optional) einen Dichtungsring **46** und einen Gleitring **47** umfasst. Der Druckkolben **16** umfasst eine dazu parallel verlaufende Dichtungswandung **24**, welche entsprechend der axialen Hubbewegung des Druckkolbens **16** über die Dichtung **25** gleitet. Weil in diesem Zusammenspiel also eine große axiale Länge notwendig ist und radial-innen der axialen Rückwand **22** des Druckraums **15** auf den Hub axial aufaddierend angeordnet werden müsste, ist es für einen geringen axialen Bauraum vorteilhaft, die Dichtung **25** radial-außen, also abgewandt von dem Druckraum **15**, anzuordnen. So sind nämlich der Längenabschnitt des Hubs des Druckkolbens **16** und die Dichtung **25** miteinander axial überlappend angeordnet. Zudem ist in der gezeigten Ausführungsform eine axial überbrückende Verbindung zu dem Drucktopf **12** zu bilden, sodass dort vorhandener Bauraum (beziehungsweise für diese Verbindung erforderlicher Bauraum mit) genutzt wird. Unabhängig davon ist, indem die Dichtung **25** einen Gleitring **47** umfasst, der Druckkolben **16** mittels der axialen Rückwand **22** zentriert. Zudem ist mittels des Gleitrings **47** eine erste Schmutzabweisung, besonders bei einer trockenen Ausführungsform der Trennkupplung **1**, zum Schonen der Dichtungsfläche des Dichtungsrings **46** geschaffen.

Die Gegenplatte **11** ist über einen weiteren getriebewellenseitigen Sicherungsring **48** auf der Getriebeeingangswelle **49** (alternativ einer Getriebenabe mit einer Steckverzahnung zum Verbinden mit einer Getriebeeingangswelle **49**) axial fixiert und die Drehmomentübertragung zwischen Gegenplatte **11** und Getriebeeingangswelle **49** erfolgt formschlüssig über eine hier nicht näher dargestellte Verzahnung.

Zum (aktiven) Öffnen der Trennkupplung **1** wird der Druckraum **15** über eine in der Getriebeeingangswelle **49** angeordnete Zuführleitung **50** mit Flüssigkeitsdruck (beispielsweise einem Betriebsöl in einem Antriebsstrang **3**) beaufschlagt, wodurch sich der Druckkolben **16** nach darstellungsgemäß links bewegt und der ausgefahrene Zustand eingenommen ist (hier der links dargestellte Druckkolben **16**). Die Anpressplatte **10**, welche über den Drucktopf **12** mit dem Druckkolben **16** verbunden ist, ist hierdurch nach links freigegeben, sodass die Anpressplatte **10** von der Reibscheibe **9** und die Reibscheibe **9** von der Gegenplatte **11** axial abhebt und somit die Reibscheibe **9** zwischen Anpressplatte **10** und Gegenplatte **11** frei drehen kann. Eine Drehmomentübertragung (oberhalb eines Schleppmoments) zwischen dem Motoranschluss **38** und der Getriebeeingangswelle **49** ist dann unterbunden.

In Fig. 2 ist schaltschematisch ein Antriebsstrang **3** in einem vereinfacht als Rechteck dargestellten Kraftfahrzeug **34** mit einer Trennkupplung **1** gezeigt. Die Trennkupplung **1** ist beispielsweise wie in Fig. 1 gezeigt ausgeführt. Der Antriebsstrang **3** umfasst eine Verbrennungskraftmaschine **27**, eine elektrische Antriebsmaschine **28**, eine Trennkupplung **1** und ein Getriebe **31**, hier umfassend eine Doppelkupplung **51** und ein Doppelschaltgetriebe **52**. Eine Drehmomentübertragung zwischen der Verbrennungskraftmaschine **27** und dem Verbraucher **32,33** (umfassend hier ein linkes Vortriebsrad **32** und ein rechtes Vortriebsrad **33**), genauer hier (optional) der Getriebeeingangswelle **49** mittels der Trennkupplung **1** unterbrechbar ist. Die Verbrennungskraftmaschine **27** weist eine Verbrennerwelle **29** auf, welche mit der Trennkupplung **1** drehmomentübertragend verbunden ist. Die Trennkupplung **1** ist abtriebsseitig mit einer Getriebeeingangswelle **49** verbunden.

Die Getriebeeingangswelle **49** wiederum ist hier (optional) mit der Doppelkupplung **51** drehmomentübertragend verbunden, wobei die Doppelkupplung **51** eine erste Teilkupplung **53** zu einer ersten Zwischenwelle **54** und eine zweite Teilkupplung **55** zu einer zweiten Zwischenwelle **56** umfasst. Die erste Zwischenwelle **54** ist mit einem ungeradzahligen Strang **57** des Doppelschaltgetriebes **52** dauerhaft drehmomentübertragend verbunden. Der ungeradzahlige Strang **57** umfasst beispielsweise einen ersten, dritten, fünften und siebten Gang. Bei geschlossener Trennkupplung **1** (also bei geschlossenem Reibpaket **4** der Trennkupplung **1**) und geschlossener erster Teilkupplung **53** ist ein Drehmoment von der Verbrennungskraftmaschine **27** über einen Gang des ungeradzahligen Strangs **57** auf das linke Vortriebsrad **32** und rechte Vortriebsrad **33** übertragbar.

Die zweite Zwischenwelle **56** ist mit einem geradzahligen Strang **58** des Doppelschaltgetriebes **52** dauerhaft drehmomentübertragend verbunden. Der geradzahlige Strang **58** umfasst entsprechend beispielsweise einen zweiten, vierten, sechsten Gang, sowie einen Rückwärtsgang. Bei geschlossener Trennkupplung **1** und geschlossener zweiter Teilkupplung **55** ist ein Drehmoment von der Verbrennungskraftmaschine **27** über einen Gang des geradzahligen Strangs **58** auf das linke Vortriebsrad **32** und rechte Vortriebsrad **33** übertragbar.

Zusätzlich ist zwischen der zweiten Teilkupplung **55** und dem geradzahligen Strang **58** des Doppelschaltgetriebes **52** eine elektrische Antriebsmaschine **28** gemäß einer Variante der sogenannten P3-Konfiguration angeordnet. Die elektrische Antriebsmaschine **28** ist dauerhaft (und unabhängig von den Zuständen der Teilkupplungen 53,55) mit dem Verbraucher 32,33 verbunden. Die Rotorwelle **30** der elektrischen Antriebsmaschine **28** ist mit der zweiten Zwischenwelle **56** drehmomentübertragend verbunden. Weil oftmals die Drehzahlspanne einer elektrischen Antriebsmaschine **28** größer ist als bei einer Verbrennungskraftmaschine **27**, ist es ausreichend, dass das Drehmoment der elektrischen Antriebsmaschine **28** einzig über einen der beiden Stränge **58,57** geleitet ist.

In einer Konfiguration (hier nicht gezeigt) ist zwischen den Vortriebsrädern **32,33** und dem Doppelschaltgetriebe **52** eine weitere (beispielsweise formschlüssig drehmomentübertragende) Trennkupplung vorgesehen. Dann ist auch zwischen der elektrischen Antriebsmaschine **28** und den Vortriebsrädern **32,33** eine Drehmomentübertragung unterbrechbar.

Der Antriebsstrang **3** ist in einer Ausführungsform mittels einzig der Verbrennungskraftmaschine **27** betreibbar, also ein Vortrieb des Kraftfahrzeugs **34** mittels der Vortriebsräder **32,33** erzeugbar. Ist in diesem Zustand ein gerader Gang oder der Rückwärtsgang (im geradzahligen Strang **58**) eingelegt, muss die zweite Teilkupplung **55** geschlossen sein. Ist in diesem Zustand ein ungerader Gang eingelegt (im ungeradzahligen Strang **57**) so müssen beiden Teilkupplungen **53,55** geschlossen sein. In einem hybriden Fahrmodus ist zu dem Drehmoment der Verbrennungskraftmaschine **27** zusätzlich von der elektrischen Antriebsmaschine **28** ein Drehmoment auf die Vortriebsräder **32,33** abgebbar. Alternativ oder zusätzlich ist ein Vortrieb des Kraftfahrzeugs **34** einzig mittels einer Drehmomentübertragung von der elektrischen Antriebsmaschine **28** auf die Vortriebsräder **32,33** erzeugbar, indem die Trennkupplung **1** geöffnet ist.

Mit der hier vorgeschlagenen Trennkupplung ist ohne Nachteile auf das dynamische Verhalten, beispielsweise das erforderliche übertragbare Drehmoment, ein sehr kompakter Aufbau erreicht.

**Bezugszeichenliste**

| | | | |
|---|---|---|---|
| 1 | Trennkupplung | 31 | Getriebe |
| 2 | Rotationsachse | 32 | linkes Vortriebsrad |
| 3 | Antriebsstrang | 33 | rechtes Vortriebsrad |
| 4 | Reibpaket | 34 | Kraftfahrzeug |
| 5 | Betätigungseinrichtung | 35 | Primärflansch |
| 6 | Dämpfervorrichtung | 36 | Sekundärflansch |
| 7 | Torsionsschwingungsdämpfer | 37 | Federpaket |
| 8 | Fliehkraftpendel | 38 | Motoranschluss |
| 9 | Reibscheibe | 39 | Dämpfernabe |
| 10 | Anpressplatte | 40 | Verzahnungselement |
| 11 | Gegenplatte | 41 | Niet |
| 12 | Drucktopf | 42 | radial-äußerer Sicherungsring |
| 13 | Tellerfeder | 43 | Drahtring |
| 14 | Reibfläche | 44 | Blattfederpaket |
| 15 | Druckraum | 45 | radial-innerer Sicherungsring |
| 16 | Druckkolben | 46 | Dichtungsring |
| 17 | Drehmomentanbindung | 47 | Gleitring |
| 18 | radial-äußerer Abschnitt | 48 | getriebewellenseitiger Sicherungsring |
| 19 | radial-innerer Abschnitt | | |
| 20 | Stufe | 49 | Getriebeeingangswelle |
| 21 | axialer Wandabschnitt | 50 | Zuführleitung |
| 22 | axiale Rückwand | 51 | Doppelkupplung |
| 23 | Spaltraum | 52 | Doppelschaltgetriebe |
| 24 | Dichtungswandung | 53 | erste Teilkupplung |
| 25 | Dichtung | 54 | erste Zwischenwelle |
| 26 | Steckverzahnung | 55 | zweite Teilkupplung |
| 27 | Verbrennungskraftmaschine | 56 | zweite Zwischenwelle |
| 28 | elektrische Antriebsmaschine | 57 | ungeradzahliger Strang |
| 29 | Verbrennerwelle | 58 | geradzahliger Strang |
| 30 | Rotorwelle | | |

## Patentansprüche

1. Trennkupplung (1) mit einer Rotationsachse (2) für einen Antriebsstrang (3), aufweisend zumindest die folgenden Komponenten:
- ein normal-geschlossen ausgeführtes Reibpaket (4) zum in einem angepressten Zustand Übertragen eines Drehmoments;
- eine mitrotierende hydrostatische Betätigungseinrichtung (5) zum schaltbaren Lösen des angepressten Zustands des Reibpakets (4); und
- eine Dämpfervorrichtung (6), umfassend einen Torsionsschwingungsdämpfer (7) und/oder ein Fliehkraftpendel (8),
wobei die Betätigungseinrichtung (5) zumindest im ausgefahrenen Zustand in axialer Überlappung mit der Dämpfervorrichtung (6) angeordnet ist,
wobei das Reibpaket (4) eine Reibscheibe (9), eine Anpressplatte (10), eine Gegenplatte (11), einen Drucktopf (12) und eine Tellerfeder (13) umfasst,
**dadurch gekennzeichnet, dass**
der Drucktopf (12) zum kraftübertragenden Kontakt mit:
- der Anpressplatte (10) radial-außerhalb der Reibfläche (14) der Reibscheibe (9), und
- der Betätigungseinrichtung (5) radial-innerhalb der Reibfläche (14) der Reibscheibe (9)
durch die Gegenplatte (11) hindurchgreifend angeordnet ist.

2. Trennkupplung (1) nach Anspruch 1, wobei
die Tellerfeder (13) zwischen der Gegenplatte (11) und dem Drucktopf (12) abgestützt ist.

3. Trennkupplung (1) nach einem der vorhergehenden Ansprüche, wobei
die Betätigungseinrichtung (5) einen Druckraum (15) mit einem axial bewegbaren Druckkolben (16) umfasst, welcher radial-innerhalb des Reibpakets (4) angeordnet ist.

4. Trennkupplung (1) nach Anspruch 3, wobei
der Druckkolben (16) einen radial-äußeren Abschnitt (18) und einen radial-inneren Abschnitt (19) aufweist,
wobei zwischen den genannten Abschnitten (18,19) eine Stufe (20) mit einem Wandabschnitt (21) mit axialer Erstreckung gebildet ist, wobei zwischen dem genannten Wandabschnitt (21) und einer korrespondierenden seitlichen Rückwand (22) des Druckraums (15) radial-innen ein Spaltraum (23) mit axialer Erstreckung gebildet ist.

5. Trennkupplung (1) nach Anspruch 3 oder 4, wobei
der Druckkolben (16) radial-außen eine Dichtungswandung (24) aufweist, und der Druckraum (15) eine zu der Dichtungswandung (24) parallele seitliche Rückwand (22) mit einer radial-außen liegenden Dichtung (25) zu der Dichtungswandung (24) des Druckkolbens (16) aufweist, wobei der Druckkolben (16) mittels der Dichtung (25) zentriert ist.

6. Trennkupplung (1) nach einem der vorhergehenden Ansprüche, wobei
die Reibscheibe (9) mit der Dämpfervorrichtung (6) mittels einer Steckverzahnung (26) dauerhaft drehmomentübertragend verbunden ist.

7. Antriebsstrang (3), aufweisend zumindest die folgenden Komponenten:
- zumindest eine Antriebsmaschine (27,28) mit einer Maschinenwelle (29,30);
- ein Getriebe (31) zum Übertragen eines Drehmoments der zumindest einen Maschinenwelle (29,30) an einen Verbraucher (32,33); und
- eine Trennkupplung (1) nach einem der vorhergehenden Ansprüche,
wobei ein Drehmoment zwischen zumindest einer der Antriebsmaschinen (27) und dem Verbraucher (32,33) mittels der Trennkupplung (1) lösbar übertragbar ist.

8. Kraftfahrzeug (34), aufweisend
zumindest ein Vortriebsrad (32,33), welches mittels eines Antriebsstrangs (3) nach Anspruch 7 zum Vortrieb des Kraftfahrzeugs (34) antreibbar ist.

## Claims

1. A disconnect clutch (1) having an axis of rotation (2) for a drive train (3), having at least the following components:
- a friction pack (4) which is designed to be normally closed for transmitting a torque when in an engaged state;
- a hydrostatic actuating device (5) rotating with the clutch for switchably releasing the engaged state of the friction pack (4); and
- a damper device (6) comprising a torsional vibration damper (7) and/or a centrifugal pendulum (8),
wherein the actuating device (5) is arranged in an axially overlapping manner with the damper device (6) at least in the extended state,
wherein the friction pack (4) comprises a friction disc (9), a pressure plate (10), a counter plate (11), a pressure pot (12) and a disc spring (13),
**characterised in that** the pressure pot (12) is arranged for force-transmitting contact with:
- the pressure plate (10) radially outside the friction surface (14) of the friction disc (9), and
- the actuating device (5) radially inside the friction surface (14) of the friction disc (9),
engaging through the counter plate (11).

2. The disconnect clutch (1) according to claim 1, wherein
the disc spring (13) is supported between the counter plate (11) and the pressure pot (12).

3. The disconnect clutch (1) according to either one of the preceding claims, wherein
the actuating device (5) comprises a pressure chamber (15) having an axially movable pressure piston (16) arranged radially inside the friction pack (4).

4. The disconnect clutch (1) according to claim 3, wherein
the pressure piston (16) has a radially outer section (18) and a radially inner section (19),
wherein a step (20) having a wall section (21) with an axial extension is formed between said sections (18, 19), wherein a gap space (23) with an axial extension is formed radially on the inside between said wall section (21) and a corresponding lateral rear wall (22) of the pressure chamber (15).

5. The disconnect clutch (1) according to claim 3 or 4, wherein
the pressure piston (16) has a sealing wall (24) radially on the outside, and the pressure chamber (15) has a lateral rear wall (22) parallel to the sealing wall (24) having a seal (25) radially on the outside of the sealing wall (24) of the pressure piston (16), wherein the pressure piston (16) is centred by means of the seal (25).

6. The disconnect clutch (1) according to any one of the preceding claims, wherein
the friction disc (9) is permanently connected to the damper device (6) in a torque-transmitting manner by means of a spline (26).

7. A drive train (3), having at least the following components:
- at least one drive machine (27, 28) having a machine shaft (29, 30);
- a transmission (31) for transmitting a torque of the at least one machine shaft (29, 30) to a consumer (32, 33); and
- a disconnect clutch (1) according to any one of the preceding claims, wherein a torque between at least one of the drive machines (27) and the consumer (32, 33) can be releasably transmitted by means of the disconnect clutch (1).

8. A motor vehicle (34), having
at least one drive wheel (32, 33) that can be driven by means of a drive train (3) according to claim 7 for driving the motor vehicle (34).

## Revendications

1. Embrayage de coupure (1) comportant un axe de rotation (2) pour une chaîne cinématique (3), présentant au moins les composants suivants :
- un bloc de friction (4) réalisé normalement fermé pour transmettre un couple dans un état pressé ;
- un actionneur (5) hydrostatique tournant pour libérer de manière commutable l'état pressé du bloc de friction (4) ; et
- un amortisseur (6) comprenant un amortisseur de vibrations de torsion (7) et/ou un pendule centrifuge (8),
dans lequel l'actionneur (5) est agencé en chevauchement axial avec l'amortisseur (6) au moins dans l'état déployé,
dans lequel le bloc de friction (4) comprend un disque de friction (9), un plateau de pression (10), un contre-plateau (11), un pot de pression (12) et une rondelle Belleville (13),
**caractérisé en ce que** le pot de pression (12) est agencé pour établir un contact de transmission de force avec :
- le plateau de pression (10) radialement à l'extérieur de la surface de friction (14) du disque de friction (9), et
- l'actionneur (5) radialement à l'intérieur de la surface de friction (14) du disque de friction (9)
en traversant le contre-plateau (11).

2. Embrayage de coupure (1) selon la revendication 1, dans lequel
la rondelle Belleville (13) est supportée entre le contre-plateau (11) et le pot de pression (12).

3. Embrayage de coupure (1) selon l'une quelconque des revendications précédentes, dans lequel
l'actionneur (5) comprend une chambre de pression (15) comportant un piston de pression (16) mobile axialement qui est agencé radialement à l'intérieur du bloc de friction (4).

4. Embrayage de coupure (1) selon la revendication 3, dans lequel
le piston de pression (16) présente une section (18) radialement extérieure et une section (19) radialement intérieure,
dans lequel un gradin (20) comportant une section de paroi (21) à extension axiale est formé entre lesdites sections (18, 19), dans lequel un interstice (23) à extension axiale est formé radialement à l'intérieur entre ladite section de paroi (21) et une paroi arrière latérale (22) correspondante de la chambre de pression (15).

5. Embrayage de coupure (1) selon la revendication 3 ou 4, dans lequel
le piston de pression (16) présente radialement à l'extérieur une paroi d'étanchéité (24) et la chambre de pression (15) présente une paroi arrière latérale (22) parallèle à la paroi d'étanchéité (24) comportant un joint (25) situé radialement à l'extérieur par rapport à la paroi d'étanchéité (24) du piston de pression (16), dans lequel le piston de pression (16) est centré au moyen du joint (25).

6. Embrayage de coupure (1) selon l'une quelconque des revendications précédentes, dans lequel
le disque de friction (9) est relié en permanence à l'amortisseur (6) au moyen d'une denture d'engagement (26) de façon à transmettre le couple.

7. Chaîne cinématique (3) présentant au moins les composants suivants :
- au moins un moteur d'entraînement (27, 28) comportant un arbre moteur (29, 30) ;
- une boîte de vitesse (31) pour transmettre un couple de l'au moins un arbre moteur (29, 30) à un consommateur (32, 33) ; et
- un embrayage de coupure (1) selon l'une quelconque des revendications précédentes, dans lequel un couple entre au moins un des moteurs d'entraînement (27) et le consommateur (32, 33) peut être transmis de façon libérable au moyen de l'embrayage de coupure (1).

8. Véhicule automobile (34), présentant
au moins une roue de propulsion (32, 33) qui peut être entraînée au moyen d'une chaîne cinématique (3) selon la revendication 7 pour propulser le véhicule automobile (34).
